(19) Europäisches Patentamt
European Patent Office
Office européen des brevets

(11) **EP 3 267 348 B1**

(12) **EUROPEAN PATENT SPECIFICATION**

(45) Date of publication and mention
of the grant of the patent:
**08.04.2020 Bulletin 2020/15**

(51) Int Cl.:
***G06F 21/55*** (2013.01)  ***G06F 21/57*** (2013.01)
***H04W 12/12*** (2009.01)  ***H04L 29/06*** (2006.01)

(21) Application number: **16758446.5**

(22) Date of filing: **24.02.2016**

(86) International application number:
**PCT/CN2016/074424**

(87) International publication number:
**WO 2016/138830 (09.09.2016 Gazette 2016/36)**

(54) **METHOD AND APPARATUS FOR RECOGNIZING RISK BEHAVIOR**

VERFAHREN UND VORRICHTUNG ZUR ERKENNUNG EINES RISIKOVERHALTENS

PROCÉDÉ ET APPAREIL POUR RECONNAÎTRE UN COMPORTEMENT À RISQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.03.2015 CN 201510093725**

(43) Date of publication of application:
**10.01.2018 Bulletin 2018/02**

(73) Proprietor: **Alibaba Group Holding Limited
Grand Cayman (KY)**

(72) Inventors:
• **MAO, Renxin**
**Hangzhou**
**Zhejiang 311121 (CN)**
• **SUN, Chao**
**Hangzhou**
**Zhejiang 311121 (CN)**
• **LI, Xinkai**
**Hangzhou**
**Zhejiang 311121 (CN)**
• **HE, Dijun**
**Hangzhou**
**Zhejiang 311121 (CN)**

(74) Representative: **Conroy, John
Fish & Richardson P.C.
Highlight Business Towers
Mies-van-der-Rohe-Straße 8
80807 München (DE)**

(56) References cited:
WO-A1-2013/059348    WO-A1-2014/088559
CN-A- 103 297 267    CN-A- 104 011 731
US-A1- 2013 117 397    US-A1- 2014 359 777
US-A1- 2015 039 513    US-B1- 7 574 382

• DAISUKE MASHIMA ET AL: "Using identity credential usage logs to detect anomalous service accesses", PROCEEDINGS OF THE 5TH ACM WORKSHOP ON DIGITAL IDENTITY MANAGEMENT, DIM '09, ACM PRESS, NEW YORK, NEW YORK, USA, 13 November 2009 (2009-11-13), pages 73-80, XP058220855, DOI: 10.1145/1655028.1655044 ISBN: 978-1-60558-786-8

## Description

## Technical Field

The present application relates to the field of computer technologies, and in particular, to a method and an apparatus for identifying a network risky behavior.

## Related Art

With development of the Internet, network behaviors of people interweave more frequently. Conceptually, a network behavior refers to a process of acquiring, sending, or transmitting network data by each network individual in the network, which generally includes: information query, file downloading, mail sending, and the like. In addition to normal network behaviors, abnormal network behaviors conducted by network individuals intentionally or unintentionally, such as browsing information irrelevant to work by a company employee during work or illegally querying an expense history by network customer service staff, may cause loss. To deal with the above problem, a risk monitoring system for monitoring a network risky behavior comes into being.

At present, a conventional risk monitoring system, by constructing a rule engine, extracts and analyzes characteristics of network behaviors that conform to definitions of rules, thereby identifying risks of network behaviors. However, the rules employed by the rule engine usually have vulnerabilities, and it is necessary to continuously add rules to remedy the vulnerabilities of the rules. This may definitely increase the workload of developers, and the efficiency is low. In addition, the rule engine itself needs to consume extra computer resources, thus causing burden to a computer system.

US 2014/359777 A1 discloses a mobile device management server and method for determining the security risk for deployed mobile devices. The mobile device management server receives risk measurements from mobile devices that are used to calculate a risk score based on rules. The risk score can also be adjusted by correlating the received risk measurements with past security breaches or typical usage measurements. The calculated risk score is compared to a one or more thresholds to determine whether to take a protective action that is associated with exceeding a threshold.

US 7 574 382 B1 discloses an anomaly detection engine monitors network traffic to detect orders placed by users from an electronic catalog of items, aggregates data about the detected orders by time period, and analyzes the aggregated data to detect anomalies in activity levels associated with specific items in the catalog. To detect whether an anomaly exists in the activity data associated with a given item, a forecasting algorithm, such as an exponential smoothing algorithm, is used to generate an expected order volume for a current time period, and the expected order volume is compared to an actual order volume.

## Summary of the Invention

The present invention is defined by the claims. Embodiments of the present application provide a method and an apparatus for identifying a risky behavior to solve the problem of low efficiency in the prior art caused by remedying a rule vulnerability during identification of a network behavior risk, and the problem that a rule engine consumes extra computer resources.

The method for identifying a risky behavior provided in the embodiments of the present application includes:

    acquiring behavior data of a user;

    determining a risk coefficient of a specific behavior link in the behavior data; and

    judging, according to the risk coefficient, whether the specific behavior link is risky.

The apparatus for identifying a risky behavior provided in the embodiments of the present application includes:

    an acquisition module configured to acquire behavior data of a user;

    a determination module configured to determine a risk coefficient of a specific behavior link in the behavior data; and

    a judgment module configured to judge, according to the risk coefficient, whether the specific behavior link is risky.

The at least one technical solution employed in the embodiments of the present application can achieve the following beneficial effects:
In the embodiments of the present application, behavior data of a user is acquired, and a specific behavior link is selected from the behavior data; a risk coefficient of the specific behavior link in the behavior data is determined by means of calculations, and finally, it is determined, according to the risk coefficient, whether the specific behavior link is risky. Compared with the rule engine manner, in the foregoing process, it is unnecessary to remedy a rule vulnerability manually, thus improving the efficiency of behavior risk identification. In addition, the foregoing process avoids the disadvantage that the rule engine consumes extra computer resources, thus alleviating burden of a computer system.

## Brief Description of the Accompanying Drawings

The accompanying drawings described here are used to provide further understanding of the present application and constitute a part of the present application. The schematic embodiments of the present application and the description thereof are used to illustrate the present application, but do not constitute improper limitations to the present application. In the drawings:

FIG. 1 shows a process of a method for identifying a risky behavior according to an embodiment of the present application;

FIG. 2 shows a process of selecting a specific behavior link from behavior data in a method for identifying a risky behavior according to an embodiment of the present application;

FIG. 3 shows a process of determining a short-term risk coefficient in a method for identifying a risky behavior according to an embodiment of the present application;

FIG. 4 shows a process of determining a historical risk coefficient in a method for identifying a risky behavior according to an embodiment of the present application;

FIG. 5 shows a process of determining a team risk coefficient in a method for identifying a risky behavior according to an embodiment of the present application;

FIG. 6 shows a process of judging whether a specific behavior link is risky in a method for identifying a risky behavior according to an embodiment of the present application; and

FIG. 7 is a schematic structural diagram of an apparatus for identifying a risky behavior according to an embodiment of the present application.

**Detailed Description**

In order to make the objectives, technical solutions, and advantages of the present application clearer, the technical solutions of the present application are described clearly and completely below with reference to the specific embodiments of the present application and the corresponding drawings. Apparently, the described embodiments are merely some of rather than all of the embodiments of the present application. Based on the embodiments in the present application, all other embodiments obtained by those of ordinary skill in the art without paying creative efforts all belong to the protection scope of the present application.

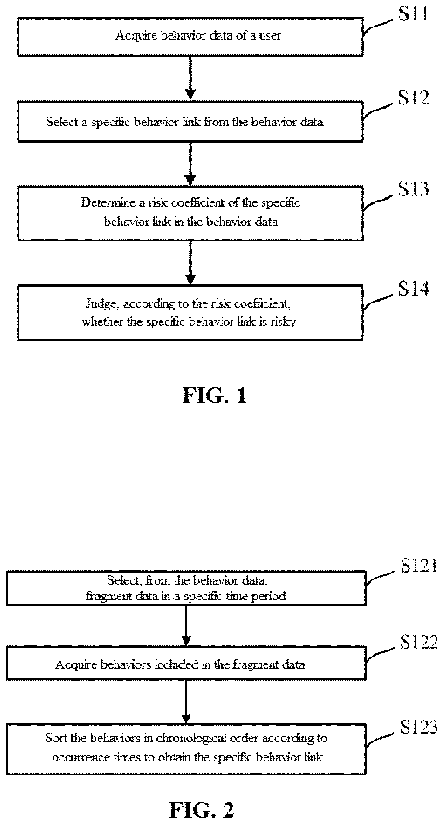

FIG. 1 shows a process of a method for identifying a risky behavior according to an embodiment of the present application, which includes the following steps: S11: Behavior data of a user is acquired.

In the embodiment of the present application, the behavior data is obtained through a network monitoring system. The network monitoring system monitors and controls computers in a network to record Internet activities (network behavior) conducted by users in the network in a time dimension. The network monitoring system includes monitoring hardware or monitoring software, and the network includes a local area network, a metropolitan area network, or a wide area network. The behavior data above is stored in a particular storage medium, and according to an actual analysis requirement, corresponding behavior data is extracted from the storage medium for analysis.

In this specification, an e-business website is taken as an example to introduce the technical solutions of the present application. Hence, the method for identifying a risky behavior is used for monitoring whether a network behavior of customer service staff of an e-business website is risky.

S12: A specific behavior link is selected from the behavior data. A behavior link refers to a combination obtained by sequentially arranging multiple behaviors according to occurrence times. As a behavior link is closer to an actual behavior intention of the user, the credibility of network behavior risk identification is improved.

FIG. 2 shows a process of selecting a specific behavior link from behavior data in a method for identifying a risky behavior according to an embodiment of the present application. In the embodiment of the present application, step S12 specifically includes the following steps:

S121: Fragment data in a specific time period is selected from behavior data.

Still taking the example in this specification, it is assumed that a network individual that needs a behavior risk analysis is a user M. In this case, fragment data of the user M in a specific time period on a particular day D is extracted from the storage medium. If the specific time period is 15 minutes, for example, 13:10 to 13:25, the fragment data refers to data about behaviors conducted by the user M in the time period of 13:10 to 13:25 on that day.

S122: Behaviors included in the fragment data are acquired.

In the foregoing example, it is assumed that in the time period of 13:10 to 13:25 on that day, behaviors conducted by the user M include a behavior X, a behavior Y, and a behavior Z.

S123: The behaviors are sorted in chronological order according to occurrence times to obtain a behavior link.

In the foregoing example, sorting is carried out in chronological order according to occurrence times of the behavior X, the behavior Y, and the behavior Z, and an obtained specific behavior link G is: behavior X→behavior γ→behavior Z.

S13: A risk coefficient of the specific behavior link in the behavior data is determined.

In the embodiment of the present application, the risk coefficient is a numerical value for expressing the degree of rareness of a specific behavior link G. Generally, if a network behavior has a relatively high probability of occurrence, i.e., the network behavior is relatively common, it indicates that the network behavior is a normal behavior, e.g., a behavior of viewing shop information by customer service staff. If a network behavior has a relatively low probability of occurrence, i.e., the network behavior only occurs in extremely rare conditions, it indicates that the network behavior is a risky behavior, e.g., a behavior of querying expense histories of relatives and friends by customer service staff. The present application judges, according to the risk coefficient, whether a network behavior is risky.

In the embodiment of the present application, the foregoing risk coefficient includes one or more of a short-term risk coefficient a, a historical risk coefficient b, and a team risk coefficient c. Certainly, in other embodiments of the present application, the analyzed risk coefficient may not be limited to the foregoing three types. The short-term risk coefficient a refers to a degree of rareness of operating the specific behavior link G by the user M in a first time period $t_1$ (such as one day). The historical risk coefficient b refers to a degree of rareness of operating the specific behavior link G by the user M in a total time length $t_2$ of registration of the user (an interval from a registration time to a current time). If it is defined that a user population to which the user M belongs is a user group and the user group includes multiple users, the team risk coefficient c refers to a degree of rareness of operating the specific behavior link G by the user group to which the user M belongs.

Processes of determining the foregoing risk coefficients will be described in detail below:

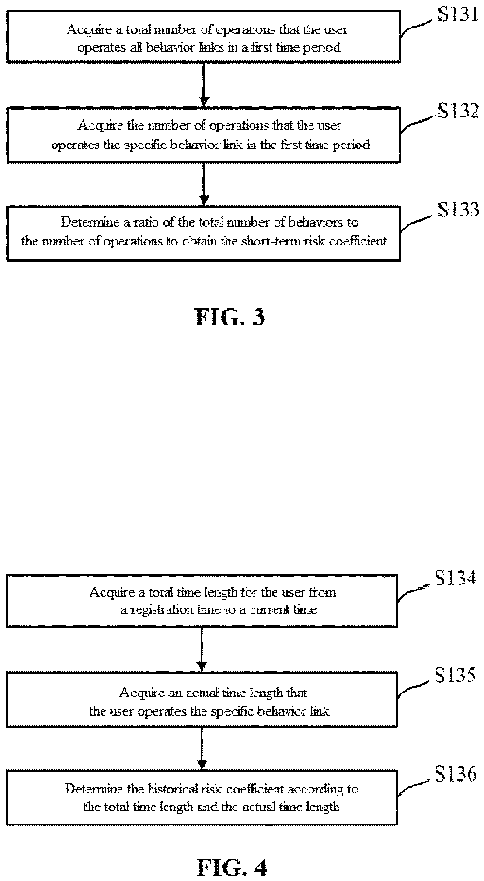

FIG. 3 shows a process of determining a short-term risk coefficient in a method for identifying a risky behavior according to an embodiment of the present application, which specifically includes the following steps:
S131: A total number of operations $s_1$ that the user M operates all behavior links in a first time period $t_1$ is acquired.

Still taking the example in this specification, assuming that the first time period $t_1$ is one day, the number of all behavior links (i.e., the total number of operations $s_1$) conducted by the user M on that day may be counted based on behavior data of the user M on that day. In the embodiment of the present application, the total number of operations si of the user M on that day is counted by using a time interval to that a single specific behavior link G lasts as a reference. Specifically, if $t_G$ is 15 minutes, the total number of operations $s_1=24*60/15=96$.

S132: The number of operations $s_2$ that the user M operates the specific behavior link G in the first time period $t_1$ is acquired.

In the foregoing example, the set first time period $t_1$ is one day, and thus the number of times (i.e., the number of operations $s_2$) that the user M operates the specific behavior link G on that day is counted. Specifically, if $t_G$ is 15 minutes, the day is divided into several 15-minute time slices, and it is sequentially judged whether the specific behavior link G occurs in each 15-minute time slice; if yes, the number of operations $s_2$ is incremented by 1, and if no, the number of operations $s_2$ is incremented by 0, till the number of operations $s_2$ on that day is obtained.

S133: A ratio of the total number of operations si to the number of operations $s_2$ is determined to obtain the short-term risk coefficient a.

In the embodiment of the present application, a formula for calculating the short-term risk coefficient a is as follows:

$$a=s_1/s_2.$$

FIG. 4 shows a process of determining a historical risk coefficient in a method for identifying a risky behavior according to an embodiment of the present application, which specifically includes the following steps:
S134: A total time length $t_2$ of the user M from a registration time to to a current time $t_a$ is acquired.

Still taking the example in this specification, it is assumed that the registration time $t_0$ of the user M in a customer service system of an e-business website is January 1st, 2014, and a current time $t_a$ is January 1st, 2015; in this case, the total time length $t_2$ is 365 days.

S135: An actual time length $t_3$ that the user M operates the specific behavior link G is acquired.

In the embodiment of the present application, in the step of acquiring an actual time length $t_3$ that the user M operates the specific behavior link G, calculation is carried out on a daily basis. In this case, behavior data of the user M in the 365 days is split into 365 pieces of fragment data on a daily basis, and it is sequentially judged whether the specific behavior link G occurs in fragment data of each day; if yes, the actual time length $t_3$ is incremented by 1; and if no, the actual time length $t_3$ is incremented by 0, till the actual number of days (i.e., the actual time length $t_3$) that the user M operates the specific behavior link G is obtained.

S136: The historical risk coefficient b is determined according to the total time length $t_2$ and the actual time length $t_3$.

In the embodiment of the present application, for an old user, as the user registers at an earlier time, the total time length $t_2$ is relatively long (such as 3 years). Assuming that the actual time length $t_3$ that the old user operates the specific behavior link G is 2 days, it is finally concluded that the probability of operating the specific behavior link G by the old user in the total time length $t_2$ is relatively low. However, for a new user, as the user registers recently, the total time length $t_2$ is relatively short (such as 5 days). Assuming that the actual time length $t_3$ that the new user operates the specific behavior link G is 2 days, it is finally concluded that the probability of operating the specific behavior link G by the new user in the total time length $t_2$ is relatively high. As can be seen, the difference between new and old users may affect the credibility of the historical risk coefficient b, and in order to smooth the difference between new and old users, step S136 specifically includes:

First of all, the total time length $t_2$ and the actual time length $t_3$ are smoothed to obtain a smooth total time length $t_{2k}$ and a smooth actual time length $t_{3k}$. In the embodiment of the present application, the smoothing may be logarithmic processing, modulo processing, root extraction processing, or the like. Taking the logarithmic processing manner as an example, $t_{2k}$=lg $t_2$; and $t_{3k}$=lg $t_3$. Certainly, the base of the logarithmic processing is not limited.

Then, calculations are carried out on the smooth total time length $t_{2k}$ and the smooth total time length $t_{3k}$ to obtain the historical risk coefficient b. In the embodiment of the present application, a formula for calculating the historical risk coefficient b is as follows:

$$b=(1+t_{3k})/(1+t_{2k})=(1+lgt_3)/(1+lgt_2).$$

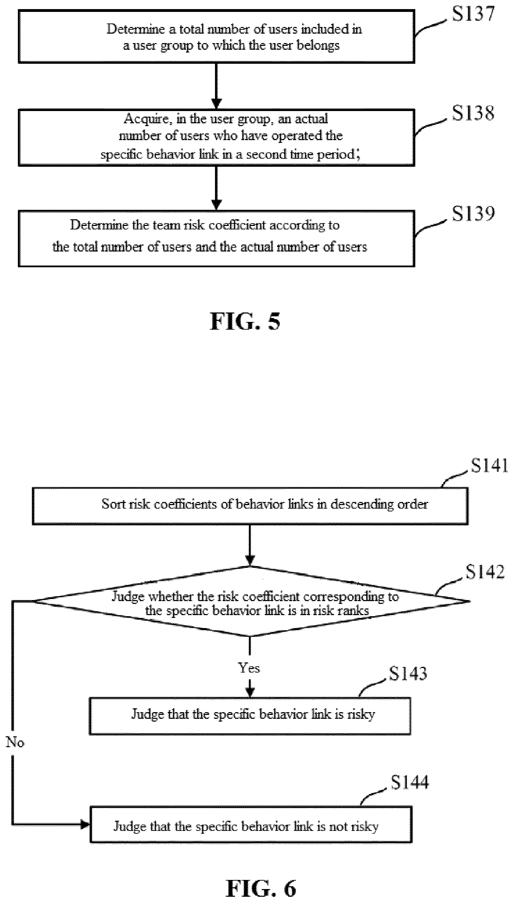

FIG. 5 shows a process of determining a team risk coefficient in a method for identifying a risky behavior according to an embodiment of the present application, which specifically includes the following steps:

S137: A total number of users n included in a user group to which the use M belongs is determined.

Still taking the example in this specification, it is assumed that the user M is customer service staff of an e-business website. In this case, a department to which the user M belongs is the user group. It is assumed that the total number of users n included in this department is 20.

S138: An actual number of users m who have operated the specific behavior link G in a second time period $t_4$ is acquired in the user group.

In the foregoing example, if the second time period $t_4$ is one day, the step S138 is used to count the number of persons who have operated the specific behavior link G (i.e., the actual number of users m) on a particular day among the 20 persons in the department to which the user M belongs. Specifically, behavior data of the 20 persons in the department on that day is separately acquired in advance, and then it is sequentially viewed whether the 20 users have operated the specific behavior link G on that day; if yes, the actual number of users m is incremented by 1; and if no, the actual number of users m is incremented by 0, till the actual number of users m who have operated the specific behavior link G on that day is obtained.

S139: The team risk coefficient c is determined according to the total number of users n and the actual number of users m.

In the embodiment of the present application, if the user group that needs to be analyzed includes a large number of users (for example, n=1000), and if it is obtained that the actual number of users m who have operated the specific behavior link G on a particular day is equal to 5, at this point, it indicates that the probability that the specific behavior link G has been operated in the user group is relatively low. However, if the user group that needs to be analyzed includes a small number of users (for example, n=10), and if it is obtained that the actual number of users m who have operated the specific behavior link G on a particular day is equal to 5, at this point, it indicates that the probability that the specific behavior link G has been operated in the user group is relatively high. As can be seen, different numbers of users in different user groups may affect the credibility of the team risk coefficient c, and in order to smooth the different numbers of users in different user groups, step S139 specifically includes:

First of all, the total number of users n and the actual number of users m are smoothed to obtain a smooth total number of users p and a smooth actual number of users q. In the embodiment of the present application, the smoothing may be logarithmic processing, modulo processing, root extraction processing, or the like. Taking the logarithmic processing manner as an example, p=lg n; and q=lg m. Certainly, the base of the logarithmic processing is not limited.

Then, calculations are carried out on the smooth total number of users p and the smooth actual number of users q to obtain the team risk coefficient c. In the embodiment of the present application, a formula for calculating the team risk coefficient c is as follows:

$$c=(1+p)/(1+q)=(1+lgn)/(1+lgm).$$

S14: It is judged, according to the risk coefficient r, whether the specific behavior link G is risky.

In the embodiment of the present application, a formula for calculating the risk coefficient r is as follows:

$$r=a \times b \times c.$$

Certainly, in other embodiments of the present application, the risk coefficient r=a+b+c.

FIG. 6 shows a process of judging whether a specific behavior link is risky in a method for identifying a risky behavior according to an embodiment of the present application. In the embodiment of the present application, step S14 specifically includes:

S141: Risk coefficients r of behavior links are sorted in descending order.

Still taking the example in this specification, it is assumed that the extracted behavior data is all behavior links of the user M on a particular day D. In the behavior data, there are 100 pieces of monitored behavior links; in this case, risk coefficients $r_1$ to $r_{100}$ of the 100 behavior links are separately determined according to the foregoing method, and then the risk coefficients $r_1$ to $r_{100}$ are sorted in descending order.

S142: It is judged whether the risk coefficient $r_G$ corresponding to the specific behavior link G is in risk ranks.

In the embodiment of the present application, a higher rank of a risk coefficient indicates a higher degree of rareness of the behavior link and a higher risk coefficient thereof. Assuming that a preset risk rank is top 3, it is judged whether the risk coefficient $r_G$ corresponding to the specific behavior link G is ranked top 3.

S143: If yes, it is determined that the specific behavior link G is risky.

If the risk coefficient $r_G$ corresponding to the specific behavior link G is ranked top 3, it indicates that the specific behavior link G is risky, and subsequently, the specific behavior link G may be published as a risky behavior to tell customer service staff of an e-business website not to operate the behavior link.

S144: If no, it is judged that the specific behavior link G is not risky.

If the risk coefficient $r_G$ corresponding to the specific behavior link G is not ranked top 3, it indicates that the specific behavior link G is not risky.

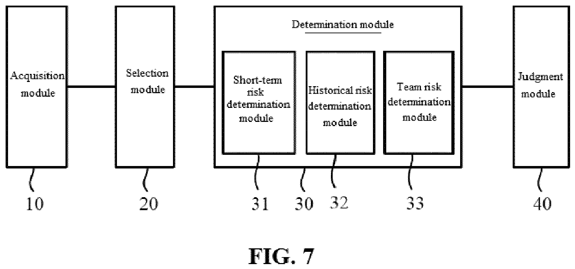

FIG. 7 is a schematic structural diagram of an apparatus for identifying a risky behavior according to an embodiment of the present application. Based on the same idea, the apparatus includes:

an acquisition module 10 configured to acquire behavior data of a user;

a selection module 20 configured to select a specific behavior link from the behavior data;

a determination module 30 configured to determine a risk coefficient of the specific behavior link in the behavior data; and

a judgment module 40 configured to judge, according to the risk coefficient, whether the specific behavior link is risky.

In the embodiment of the present application, the selection module 20 is specifically configured to:

select, from the behavior data, fragment data in a specific time period;

acquire behaviors included in the fragment data; and

sort the behaviors in chronological order according to occurrence times to obtain the specific behavior link.

In the embodiment of the present application, the risk coefficient includes one or more of a short-term risk coefficient, a historical risk coefficient, and a team risk coefficient.

In the embodiment of the present application, the determination module 30 includes a short-term risk determination module 31 configured to:

acquire a total number of operations that the user operates all behavior links in a first time period;

acquire the number of operations that the user operates the specific behavior link in the first time period; and

determine a ratio of the total number of operations to the number of operations to obtain the short-term risk coefficient.

In the embodiment of the present application, the determination module 30 includes a historical risk determination module 32 configured to:

acquire a total time length for the user from a registration time to a current time;

acquire an actual time length that the user operates the specific behavior link; and

determine the historical risk coefficient according to the total time length and the actual time length.

In the embodiment of the present application, the determination module 30 includes a team risk determination module 33 configured to:

determine a total number of users included in a user group to which the user belongs;

acquire, in the user group, an actual number of users who have operated the specific behavior link in a second time period; and

determine the team risk coefficient according to the total number of users and the actual number of users.

In the embodiment of the present application, the historical risk determination module 32 includes a first smoothing unit configured to:

smooth the total time length and the actual time length to obtain a smooth total time length and a smooth actual time length; and

carry out calculations on the smooth actual time length and the smooth total time length to obtain the historical risk coefficient.

In the embodiment of the present application, the team risk determination module 33 includes a second smoothing unit configured to:

smooth the total number of users and the actual number of users to obtain a smooth total number of users and a smooth actual number of users; and

carry out calculations on the smooth total number of users and the smooth actual number of users to obtain the team risk coefficient.

In the embodiment of the present application, the determination module 30 is specifically configured to: multiply or sum the short-term risk coefficient, the historical risk coefficient, and the team risk coefficient to obtain the risk coefficient.

In the embodiment of the present application, the judgment module 40 is specifically configured to:

sort risk coefficients of behavior links in descending order;

judge whether the risk coefficient corresponding to the specific behavior link is in risk ranks; and

if yes, judge that the specific behavior link is risky; and if no, judge that the specific behavior link is not risky.

The method and apparatus provided in the embodiments of the present application acquire behavior data of a user, select a specific behavior link from the behavior data, determine a risk coefficient of the specific behavior link in the behavior data by means of calculations, and finally, determine, according to the risk coefficient, whether the specific behavior link is risky. Compared with the rule engine manner, in the foregoing process, it is unnecessary to remedy a rule vulnerability manually, thus improving the efficiency of behavior risk identification. In addition, the foregoing process avoids the disadvantage that the rule engine consumes extra computer resources, thus alleviating burden of a computer system.

In the embodiment of the present application, three factors: short-term (such as a particular day), history (from a registration time to a current time), and team (a user group to which the user belongs), are comprehensively considered to analyze whether a behavior of a user is risky, thus reducing the impact of some sudden factor transitions (such as service orientation adjustment of the team or job transfer of the user) on the behavior link of the user, thereby improving the accuracy and credibility of risky behavior identification.

It is worth mentioning that, the apparatus for identifying a risky behavior disclosed in this specification is generated according to the same idea based on the method for identifying a risky behavior. Therefore, the method for identifying a risky behavior may continue to use all technical features of the above apparatus for identifying a risky behavior. Details are not described here again.

It should be additionally noted that, formulas for calculating the risk coefficients in the present application are not limited to the disclosed embodiments. For example, in other embodiments, the short-term risk coefficient $a=s_2/s_1$; the historical risk coefficient $b=(1+\lg t_2)/(1+\lg t_3)$; and the team risk coefficient $c=(1+\lg m)/(1+\lg n)$. Correspondingly, during subsequent judgment of whether the behavior link is risky, risk coefficients of behavior links are sorted in ascending order to judge whether the risk coefficient corresponding to the specific behavior link is in risk ranks.

Persons skilled in the art should understand that, the embodiments of the present invention may be provided as a method, a system, or a computer program product. Therefore, the present invention may be implemented in the form of a complete hardware embodiment, a complete software embodiment, or an embodiment combining software and hardware. Moreover, the present invention may employ the form of a computer program product implemented on one or more computer usable storage media (including, but not limited to, a magnetic disk memory, a CD-ROM, an optical memory, and the like) including computer usable program code.

The present invention is described with reference to flowcharts and/or block diagrams of the method, device (system), and computer program product according to the embodiments of the present invention. It should be understood that computer program instructions may be used to implement each process and/or block in the flowcharts and/or block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or a processor of another programmable data processing device generate an apparatus for implementing a specified function in one or more processes in the flowcharts and/or in one or more blocks in the block diagrams.

These computer program instructions may also be stored in a computer readable memory that can instruct the computer or another programmable data processing device to work in a particular manner, such that the instructions stored in the computer readable memory generate an article of manufacture that includes an instruction apparatus. The instruction apparatus implements a specified function in one or more processes in the flowcharts and/or in one or more blocks in the block diagrams.

These computer program instructions may also be loaded onto a computer or another programmable data processing device, such that a series of operating steps are performed on the computer or another programmable device, thereby generating computer-implemented processing. Therefore, the instructions executed on the computer or another programmable device provide steps for implementing a specified function in one or more processes in the flowcharts and/or in one or more blocks in the block diagrams.

In a typical configuration, the computing device includes one or more processors (CPUs), an input/output interface, a network interface, and a memory.

The memory may include a volatile memory, a random access memory (RAM) and/or a non-volatile memory or the like in a computer readable medium, for example, a read-only memory (ROM) or a flash RAM. The memory is an example of the computer readable medium.

The computer readable medium includes non-volatile or volatile, and movable or non-movable media, and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition in this text, the computer readable medium does not include transitory media, such as a modulated data signal and a carrier.

It should be further noted that, the terms "include", "comprise", or any variants thereof are intended to cover a non-exclusive inclusion, such that a process, a method, a commodity or a device that includes a series of elements not only includes such elements but also includes other elements not specified expressly, or may further include inherent elements of the process, method, commodity, or device. Without more restrictions, an element limited by the phrase "include a/an..." does not exclude other same elements existing in the process, method, commodity, or device that includes the element.

Persons skilled in the art should understand that, the embodiments of the present application may be provided as a method, a system, or a computer program product. Therefore, the present application may be implemented in the form of a complete hardware embodiment, a complete software embodiment, or an embodiment combining software and hardware. Moreover, the present application may employ the form of a computer program product implemented on one or more computer usable storage media (including, but not limited to, a magnetic disk memory, a CD-ROM, an optical memory, and the like) including computer usable program code.

The above are merely the embodiments of the present application, which are not used to limit the present application. For persons skilled in the art, the present application may have various changes and alterations. Modifications, equivalent replacements, and improvements made to the present application should be included in the scope of the claims of the present application.

**Claims**

1. A method for identifying risky behavior within a computer network, the method comprising:

    acquiring user behavior data, the user behavior data comprising a record of network activities conducted by the user in a network in a time period (S11);
    selecting a specific behavior link from the behavior data by sequentially arranging the network activities within the computer network according to occurrence times (S12);
    determining a risk coefficient of the specific behavior link in the behavior data, the risk coefficient comprising a numerical value for expressing a degree of rareness of the specific behavior link (S13), comprising determining a historical risk coefficient by:

        acquiring a total time length for the user from a registration time to a current time;
        acquiring an actual time length that the user operates the specific behavior link; and
        smoothing the total time length and the actual time length using logarithmic processing to obtain a smooth total time length and a smooth actual time length, wherein the smooth total time length comprises a logarithm of the total time length and the smooth actual time length comprises a logarithm of the actual time length; and
        calculating the historical risk coefficient by dividing i) the smooth actual time length plus one, by ii) the smooth total time length plus one; and

    determining, according to the risk coefficient, whether the specific behavior link is risky (S14).

2. The method of claim 1, wherein the selecting the specific behavior link from the behavior data specifically comprises:

    selecting, from the behavior data, fragment data in a specific time period (S121);
    acquiring behaviors comprised in the fragment data (S122); and

sorting the behaviors in chronological order according to occurrence times to obtain the specific behavior link (S123).

3. The method of claim 1, wherein the risk coefficient comprises one or more of a short-term risk coefficient, a historical risk coefficient, and a team risk coefficient.

4. The method of claim 3, wherein the determining the risk coefficient of the specific behavior link in the behavior data specifically comprises determining a short-term risk coefficient by:

acquiring a total number of operations that the user operates all behavior links in a first time period (S131);
acquiring the number of operations that the user operates the specific behavior link in the first time period (S132); and
determining a ratio of the total number of operations to the number of operations to obtain the short-term risk coefficient (S133).

5. The method of claim 3, wherein the determining a risk coefficient of the specific behavior link in the behavior data specifically comprises determining a team risk coefficient by:

determining a total number of users comprised in a user group to which the user belongs (S137);
acquiring, in the user group, an actual number of users who have operated the specific behavior link in a second time period (S138); and
determining the team risk coefficient according to the total number of users and the actual number of users (S139).

6. The method of claim 5, wherein the determining the team risk coefficient according to the total number of users and the actual number of users specifically comprises:

smoothing the total number of users and the actual number of users to obtain a smooth total number of users and a smooth actual number of users; and
carrying out calculations on the smooth total number of users and the smooth actual number of users to obtain the team risk coefficient.

7. The method of claim 6, wherein smoothing comprises logarithmic processing, modulo processing, or root extraction processing.

8. The method of claim 3, wherein the determining the risk coefficient of the specific behavior link in the behavior data specifically comprises:

multiplying or summing the short-term risk coefficient, the historical risk coefficient, and the team risk coefficient to obtain the risk coefficient.

9. The method of claim 1, wherein the determining, according to the risk coefficient, whether the target behavior is risky specifically comprises:

sorting risk coefficients of behavior links in descending order (S141);
determining whether the risk coefficient corresponding to the specific behavior link is in risk ranks (S142); and
if yes, determining that the specific behavior link is risky; and if no, determining that the specific behavior link is not risky (S143).

10. The method of claim 1, wherein the logarithm of the total time length and the logarithm of the actual time length comprise logarithms of arbitrary base.

11. An apparatus for identifying a risky behavior, the apparatus comprising a plurality of modules configured to perform the method of any one of claims 1 to 10.

**Patentansprüche**

1. Verfahren zur Identifizierung riskanten Verhaltens innerhalb eines Computernetzwerks, das Verfahren umfassend:

Erfassen von Nutzerverhaltensdaten, die Nutzerverhaltensdaten umfassend eine Aufzeichnung von Netzwerkaktivitäten, die durch den Benutzer in einem Netzwerk in einer Zeitspanne vorgenommen wurden (S11);
Auswählen einer bestimmten Verhaltensverknüpfung aus den Verhaltensdaten durch sequenzielles Anordnen der Netzwerkaktivitäten innerhalb des Computernetzwerks gemäß Auftrittszeiten (S12);
Bestimmen eines Risikokoeffizienten der bestimmten Verhaltensverknüpfung in den Verhaltensdaten, der Risikokoeffizient umfassend einen numerischen Wert zum Ausdruck eines Seltenheitsgrads der bestimmten Verhaltensverknüpfung (S13), umfassend Bestimmen eines historischen Risikokoeffizienten durch:

Erfassen einer Gesamtzeitdauer für den Benutzer von einer Registrierungszeit zu einer aktuellen Zeit;
Erfassen einer tatsächlichen Zeitdauer, die der Benutzer die bestimmte Verhaltensverknüpfung anwendet; und Glätten der Gesamtzeitdauer und der tatsächlichen Zeitdauer mithilfe logarithmischer Verarbeitung, um eine glatte Gesamtzeitdauer und eine glatte tatsächliche Zeitdauer zu erhalten, wobei die glatte Gesamtzeitdauer einen Logarithmus der Gesamtzeitdauer umfasst und die glatte tatsächliche Zeitdauer einen Logarithmus der tatsächlichen Zeitdauer umfasst; und

Berechnen des historischen Risikokoeffizienten durch Dividieren i) der glatten tatsächlichen Zeitdauer plus eins, durch ii) die glatte Gesamtzeitdauer plus eins; und

Bestimmen, gemäß dem Risikokoeffizienten, ob die bestimmte Verhaltensverknüpfung riskant ist (S14).

2. Verfahren nach Anspruch 1, wobei das Auswählen der bestimmten Verhaltensverknüpfung aus den Verhaltensdaten im Speziellen Folgendes umfasst:

Auswählen von Fragmentdaten in einer bestimmten Zeitspanne aus den Verhaltensdaten (S121),

Erfassen von Verhalten, die in den Fragmentdaten enthalten sind (S122); und

Sortieren der Verhalten in chronologischer Reihenfolge gemäß Auftrittszeiten, um die bestimmte Verhaltensverknüpfung (S123) zu erhalten.

3. Verfahren nach Anspruch 1, wobei der Risikokoeffizient einen oder mehrere Kurzzeit-Risikokoeffizienten, einen historischen Risikokoeffizienten und einen Team-Risikokoeffizienten umfasst.

4. Verfahren nach Anspruch 3, wobei das Bestimmen des Risikokoeffizienten der bestimmten Verhaltensverknüpfung in den Verhaltensdaten im Speziellen Bestimmen eines Kurzzeit-Risikokoeffizienten durch Folgendes umfasst:

Erfassen einer Gesamtanzahl von Anwendungen, die der Benutzer alle Verhaltensverknüpfungen in einer ersten Zeitspanne anwendet (S131);

Erfassen der Anzahl von Anwendungen, die der Benutzer die bestimmte Verhaltensverknüpfung in der ersten Zeitspanne anwendet (S132); und

Bestimmen eines Verhältnisses der Gesamtanzahl von Anwendungen zu der Anzahl von Anwendungen, um den Kurzzeit-Risikokoeffizienten zu erhalten (S133).

5. Verfahren nach Anspruch 3, wobei das Bestimmen eines Risikokoeffizienten der bestimmten Verhaltensverknüpfung in den Verhaltensdaten im Speziellen Bestimmen eines Team-Risikokoeffizienten durch Folgendes umfasst:

Bestimmen einer Gesamtanzahl von Benutzern, die in einer Benutzergruppe enthalten sind, zu welcher der Benutzer gehört (S137);

Erfassen, in der Benutzergruppe, einer tatsächlichen Anzahl von Benutzern, die die bestimmte Verhaltensverknüpfung in einer zweiten Zeitspanne angewendet haben (S138); und

Bestimmen des Team-Risikokoeffizienten gemäß der Gesamtanzahl von Benutzern und der tatsächlichen Anzahl von Benutzern (S139).

6. Verfahren nach Anspruch 5, wobei das Bestimmen des Team-Risikokoeffizienten gemäß der Gesamtanzahl von Benutzern und der tatsächlichen Anzahl von Benutzern im Speziellen Folgendes umfasst:

Glätten der Gesamtanzahl von Benutzern und der tatsächlichen Anzahl von Benutzern, um eine glatte Gesamtanzahl von Benutzern und eine glatte tatsächliche Anzahl von Benutzern zu erhalten; und

Durchführen von Berechnungen an der glatten Gesamtanzahl von Benutzern und der glatten tatsächlichen Anzahl von Benutzern, um den Team-Risikokoeffizienten zu erhalten.

7. Verfahren nach Anspruch 6, wobei Glätten logarithmisches Verarbeiten, Modulo-Verarbeiten oder Radizierungs-Verarbeiten umfasst.

8. Verfahren nach Anspruch 3, wobei das Bestimmen des Risikokoeffizienten der bestimmten Verhaltensverknüpfung in den Verhaltensdaten im Speziellen Folgendes umfasst:
Multiplizieren oder Summieren des Kurzzeit-Risikokoeffizienten, des historischen Risikokoeffizienten und des Team-Risikokoeffizienten, um den Risikokoeffizienten zu erhalten.

9. Verfahren nach Anspruch 1, wobei das Bestimmen, gemäß dem Risikokoeffizienten, ob das Zielverhalten riskant ist, im Speziellen Folgendes umfasst:

Sortieren von Risikokoeffizienten von Verhaltensverknüpfungen in absteigender Reihenfolge (S141);

Bestimmen, ob sich der Risikokoeffizient, der der bestimmten Verhaltensverknüpfung entspricht, in Risikorängen befindet (S142); und wenn ja, Bestimmen, dass die bestimmte Verhaltensverknüpfung riskant ist; und wenn nein, Bestimmen, dass die bestimmte Verhaltensverknüpfung nicht riskant ist (S143).

10. Verfahren nach Anspruch 1, wobei der Logarithmus der Gesamtzeitdauer und der Logarithmus der tatsächlichen Zeitdauer Logarithmen beliebiger Basis umfassen.

11. Vorrichtung zur Identifizierung eines riskanten Verhaltens, die Vorrichtung umfassend eine Mehrzahl von Modulen, die ausgelegt sind, das Verfahren nach einem der Ansprüche 1 bis 10 durchzuführen.

**Revendications**

1. Procédé pour identifier un comportement à risque dans un réseau d'ordinateurs, le procédé consistant:

   à acquérir des données de comportement d'utilisateur, les données de comportement d'utilisateur comprenant un enregistrement d'activités de réseau menées par l'utilisateur dans un réseau pendant une période de temps (S11);
   à sélectionner un lien de comportement spécifique à partir des données de comportement en agençant de manière séquentielle les activités de réseau dans le réseau d'ordinateurs selon des moments d'occurrence (S 12);
   à déterminer un coefficient de risque du lien de comportement spécifique dans les données de comportement, le coefficient de risque comprenant une valeur numérique pour exprimer le degré de rareté du lien de comportement spécifique (S13), comprenant la détermination d'un coefficient de risque historique:

   en acquérant un laps de temps total pour l'utilisateur à partir d'un moment d'enregistrement jusqu'au moment réel;
   en acquérant un laps de temps réel pendant lequel l'utilisateur exploite le lien de comportement spécifique; et
   en lissant le laps de temps total et le laps de temps réel à l'aide d'un traitement logarithmique pour obtenir un laps de temps total lisse et un laps de temps réel lisse, dans lequel le laps de temps total lisse comprend un logarithme du laps de temps total et le laps de temps réel lisse comprend un logarithme du laps de temps réel; et
   en calculant le coefficient de risque historique en divisant i) le laps de temps réel lisse plus un, par ii) le laps de temps total lisse plus un; et
   à déterminer, selon le coefficient de risque, si le lien de comportement spécifique est risqué (S14).

2. Procédé selon la revendication 1, dans lequel la sélection du lien de comportement spécifique à partir des données de comportement consiste spécialement:

   à sélectionner, à partir des données de comportement, des données de fragment pendant une période de temps spécifique (S121);
   à acquérir des comportements inclus dans les données de fragment (S122); et
   à trier les comportements selon un ordre chronologique selon des moments d'occurrence pour obtenir le lien de comportement spécifique (S123).

3. Procédé selon la revendication 1, dans lequel le coefficient de risque comprend un coefficient de risque à court terme et/ou un coefficient de risque historique et/ou un coefficient de risque d'équipe.

4. Procédé selon la revendication 3, dans lequel la détermination du coefficient de risque du lien de comportement spécifique dans les données de comportement consiste spécialement à déterminer un coefficient de risque à court terme:

   en acquérant un nombre total d'opérations indiquant l'utilisateur exploite tous les liens de comportement pendant une première période de temps (S131),
   en acquérant le nombre d'opérations indiquant l'utilisateur exploite le lien de comportement spécifique pendant la première période de temps (S132); et
   en déterminant un rapport entre le nombre total d'opérations et le nombre d'opérations pour obtenir le coefficient de risque à court terme (S133).

5. Procédé selon la revendication 3, dans lequel la détermination d'un coefficient de risque du lien de comportement spécifique dans les données de comportement consiste spécialement à déterminer un coefficient de risque d'équipe:

   en déterminant un nombre total d'utilisateurs inclus dans un groupe d'utilisateurs auquel l'utilisateur appartient (S137);
   en acquérant, dans le groupe d'utilisateurs, un nombre réel d'utilisateurs qui ont exploité le lien de comportement spécifique pendant une seconde période de temps (S138); et
   en déterminant le coefficient de risque d'équipe selon le nombre total d'utilisateurs et le nombre réel d'utilisateurs (S139).

6. Procédé selon la revendication 5, dans lequel la détermination du coefficient de risque d'équipe selon le nombre total d'utilisateurs et le nombre réel d'utilisateurs consiste spécialement:

   à lisser le nombre total d'utilisateurs et le nombre réel d'utilisateurs pour obtenir un nombre total lisse d'utilisateurs et un nombre réel lisse d'utilisateurs; et

à effectuer des calculs sur le nombre total lisse d'utilisateurs et sur le nombre réel lisse d'utilisateurs pour obtenir le coefficient de risque d'équipe.

7. Procédé selon la revendication 6, dans lequel un lissage comprend un traitement logarithmique, un traitement modulo ou un traitement d'extraction de racine.

8. Procédé selon la revendication 3, dans lequel la détermination du coefficient de risque du lien de comportement spécifique dans les données de comportement consiste spécialement:

à multiplier ou à additionner le coefficient de risque à court terme, le coefficient de risque historique et le coefficient de risque d'équipe pour obtenir le coefficient de risque.

9. Procédé selon la revendication 1, dans lequel la détermination, selon le coefficient de risque, du fait de savoir si le comportement cible est risqué consiste spécialement :

à trier des coefficients de risque de liens de comportement selon un ordre décroissant (S141);
à déterminer si le coefficient de risque correspondant au lien de comportement spécifique se trouve dans des classes de risque (S 142); et
si tel est le cas, à déterminer que le lien de comportement spécifique est risqué ; et si tel n'est pas le cas, à déterminer que le lien de comportement spécifique n'est pas risqué (S 143).

10. Procédé selon la revendication 1, dans lequel le logarithme du laps de temps total et le logarithme du laps de temps réel comprennent des logarithmes d'une base arbitraire.

11. Appareil pour identifier un comportement à risque, l'appareil comprenant une pluralité de modules configurés pour réaliser le procédé selon l'une quelconque des revendications 1 à 10.

Acquire behavior data of a user — S11

Select a specific behavior link from the behavior data — S12

Determine a risk coefficient of the specific behavior link in the behavior data — S13

Judge, according to the risk coefficient, whether the specific behavior link is risky — S14

**FIG. 1**

Select, from the behavior data, fragment data in a specific time period — S121

Acquire behaviors included in the fragment data — S122

Sort the behaviors in chronological order according to occurrence times to obtain the specific behavior link — S123

**FIG. 2**

Acquire a total number of operations that the user operates all behavior links in a first time period — S131

Acquire the number of operations that the user operates the specific behavior link in the first time period — S132

Determine a ratio of the total number of behaviors to the number of operations to obtain the short-term risk coefficient — S133

**FIG. 3**

Acquire a total time length for the user from a registration time to a current time — S134

Acquire an actual time length that the user operates the specific behavior link — S135

Determine the historical risk coefficient according to the total time length and the actual time length — S136

**FIG. 4**

```
┌─────────────────────────────────────────────┐
│  Determine a total number of users included in │ ── S137
│    a user group to which the user belongs      │
└─────────────────────────────────────────────┘
                      │
                      ▼
┌─────────────────────────────────────────────┐
│        Acquire, in the user group, an actual   │ ── S138
│      number of users who have operated the     │
│   specific behavior link in a second time period; │
└─────────────────────────────────────────────┘
                      │
                      ▼
┌─────────────────────────────────────────────┐
│   Determine the team risk coefficient according to │ ── S139
│  the total number of users and the actual number of users │
└─────────────────────────────────────────────┘
```

**FIG. 5**

```
┌─────────────────────────────────────────────┐
│  Sort risk coefficients of behavior links in descending order │ ── S141
└─────────────────────────────────────────────┘
                      │
                      ▼
            ╱◇──────────────────◇╲
          ╱   Judge whether the risk coefficient corresponding to   ╲ ── S142
          ╲        the specific behavior link is in risk ranks       ╱
            ╲◇──────────────────◇╱
                      │
              No      │ Yes
     ◄────────────────┤
     │                ▼
     │        ┌─────────────────────────────────┐
     │        │ Judge that the specific behavior link is risky │ ── S143
     │        └─────────────────────────────────┘
     │
     ▼
┌─────────────────────────────────────────────┐
│  Judge that the specific behavior link is not risky │ ── S144
└─────────────────────────────────────────────┘
```

**FIG. 6**

15

| | | Determination module | | | |
|---|---|---|---|---|---|
| Acquisition module | Selection module | Short-term risk determination module | Historical risk determination module | Team risk determination module | Judgment module |

10    20    31    30    32    33    40

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014359777 A1
- US 7574382 B1